# EUROPÄISCHE PATENTSCHRIFT

(11) **EP 1 134 364 B1**
(45) Veröffentlichungstag und Bekanntmachung des Hinweises auf die Patenterteilung: **03.05.2006**
(21) Anmeldenummer: 01104685.1
(22) Anmeldetag: 24.02.2001
(51) Int. Cl.: F01L 9/04, F02D 41/20

(54) **Verfahren zum Betrieb eines elektromagnetischen Aktors**
Method for actuating electromagnetic actuators
Procédé pour le fonctionnement d'actionneurs électromagnétiques

(30) Priorität: 16.03.2000 DE 10012988
(43) Veröffentlichungstag der Anmeldung: 19.09.2001
(73) Patentinhaber: Bayerische Motoren Werke Aktiengesellschaft, 80809 München (DE)
(72) Erfinder: Cosfeld, Ralf, 81375 München (DE); Reif, Konrad, Dr., 85521 Ottobrunn (DE)

(56) Entgegenhaltungen:
- EP-A- 0 927 817
- DE-A- 19 518 056
- DE-A- 19 530 121
- DE-A- 19 714 413
- DE-A- 19 832 198
- US-A- 6 003 481

## Beschreibung

Die Erfindung betrifft ein Verfahren zum Betrieb eines elektromagnetischen Aktors gemäß dem Oberbegriff des Anspruchs 1.

Ein bevorzugter Anwendungsfall für einen elektromagnetischen Aktor mit den Merkmalen des Anspruchs 1 ist der elektromagnetisch betätigte Ventiltrieb von Brennkraftmaschinen, d.h. die Gaswechsel-Hubventile einer Hubkolben-Brennkraftmaschine werden von derartigen Aktoren in gewünschter Weise betätigt, also oszillierend geöffnet und geschlossen. Bei einem derartigen elektromechanischen Ventiltrieb werden die Hubventile einzeln oder auch in Gruppen über elektromechanische Stellglieder, die sog. Aktoren bewegt, wobei der Zeitpunkt für das Öffnen und das Schließen jedes Hubventiles im wesentlichen völlig frei gewählt werden kann. Hierdurch können die Ventilsteuerzeiten der Brennkraftmaschine optimal an den aktuellen Betriebszustand (dieser ist durch Drehzahl und Last definiert) sowie an die jeweiligen Anforderungen hinsichtlich Verbrauch, Drehmoment, Emissionen, Komfort und Ansprechverhalten eines von der Brennkraftmaschine angtriebenen Fahrzeuges angepaßt werden.

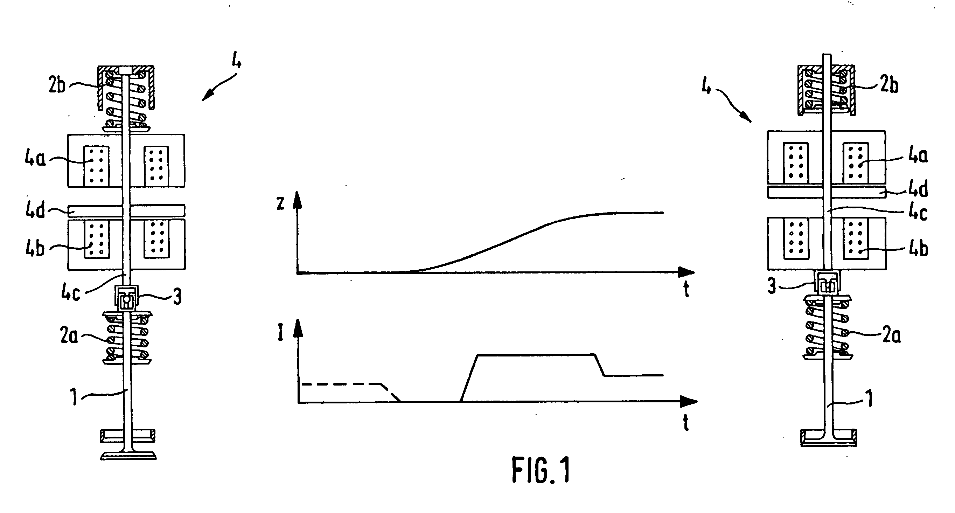

Die wesentlichen Bestandteile eines bekannten Aktors zur Betätigung der Hubventile einer Brennkraftmaschine sind ein Anker sowie zwei Elektromagnete für das Halten des Ankers in der Position "Hubventil offen" bzw. "Hubventil geschlossen" mit den zugehörigen Elektormagnet-Spulen und ferner Rückstellfedern für die Bewegung des Ankers zwischen den Positionen "Hubventil offen" und "Hubventil geschlossen". Hierzu wird auch auf die beigefügte **Figur 1** verwiesen, die einen derartigen Aktor mit zugeordnetem Hubventil in den beiden möglichen Endlagen des Hubventils und Aktor-Ankers zeigt. Zwischen den beiden gezeigten Zuständen bzw. Positionen der Aktor-Hubventil-Einheit ist der Verlauf des Ankerhubes z bzw. Ankerweges zwischen den beiden Elektromagnet-Spulen und ferner der Verlauf des Stromflusses I in den beiden Elektromagnet-Spulen jeweils über der Zeit t entsprechend einem (gegenüber der eingangs genannten DE 195 30 121 A1 einfacheren) bekannten Stand der Technik dargestellt.

In **Figur 1** ist der Schließvorgang eines Brennkraftmaschinen-Hubventiles dargestellt, welches mit der Bezugsziffer 1 bezeichnet ist. Wie üblich greift an diesem Hubventil 1 eine Ventilschließfeder 2a an. Ferner wirkt auf den Schaft des Hubventiles 1 - hier unter Zwischenschaltung eines (nicht unbedingt erforderlichen) hydraulischen Ventilspielausgleichselements 3 - der in seiner Gesamtheit mit 4 bezeichnete Aktor ein. Dieser besteht neben zwei Elektromagnet-Spulen 4a, 4b aus einer auf den Schaft des Hubventiles 1 einwirkenden Stößelstange 4c, die einen Anker 4d trägt, der zwischen den Elektromagnet-Spulen 4a, 4b oszillierend längsverschiebbar geführt ist. Am dem Schaft des Hubventiles 1 abgewandten Ende der Stößelstange 4c greift ferner eine Ventilöffnungsfeder 2b an.

Hierbei handelt es sich somit um ein schwingungsfähiges System, für welches die Ventilschließfeder 2a und die Ventilöffnungsfeder 2b eine erste sowie eine zweite Rückstellfeder bilden, für welche folglich im weiteren ebenfalls die Bezugsziffern 2a, 2b verwendet werden.

Linksseitig ist in Figur 1 die erste Endposition dieses schwingungsfähigen Systemes dargestellt, in welcher das Hubventil 1 vollständig geöffnet ist und der Anker 4d an der unteren Elektromagnet-Spule 4b anliegt. Diese Spule wird im folgenden auch als Öffner-Spule 4b bezeichnet, nachdem diese Spule 4b das Hubventil 1 in seiner geöffneten Position hält.

Rechtsseitig ist in Figur 1 die zweite Endposition des schwingungsfähigen Systemes dargestellt, in welcher das Hubventil 1 vollständig geschlossen ist und der Anker 4d an der oberen Elektromagnet-Spule 4a anliegt. Im folgenden wird diese Spule auch als Schließer-Spule 4a bezeichnet, nachdem diese Spule 4a das Hubventil 1 in seiner geschlossenen Position hält.

Im folgenden wird nun kurz der Schließvorgang des Hubventils 1 beschrieben, d.h. in Figur 1 der Übergang vom linksseitigen Zustand in den rechtsseitig dargestellten Zustand; dazwischen sind die entsprechenden Verläufe der in den Spulen 4a, 4b fließenden elektrischen Ströme I sowie der Hubverlauf bzw. die Wegkoordinate z des Ankers 4d jeweils über der Zeit t aufgetragen.

Ausgehend von der linksseitigen Position "Hubventil offen" wird zunächst die Öffner-Spule 4b bestromt, um den Anker 4d in dieser Position gegen die gespannte Ventilschließfeder 2a (= untere erste Rückstellfeder 2a) zu drücken, wobei der Strom I in dieser Spule 4b im I-t-Diagramm gestrichelt dargestellt ist. Wird nun der Strom I der Öffner-Spule 4b für einen gewünschten Übergang nach "Hubventil geschlossen" ausgeschaltet, so löst sich der Anker 4d von dieser Spule 4b und das Hubventil 1 wird durch die gespannte Ventilschließfeder 2a in etwa bis zu seiner Mittellage (nach oben hin) beschleunigt, bewegt sich jedoch aufgrund seiner Massenträgheit weiter und spannt dabei die Ventilöffnungsfeder 2b, so daß das Hubventil 1 (und der Anker 4d) dadurch abgebremst werden. Daraufhin wird die Schließer-Spule 4a zu einem geeigneten Zeitpunkt bestromt (der Strom I für die Spule 4a ist im I-t-Diagramm in durchgezogener Linie dargestellt), wodurch diese Spule 4a den Anker 4d einfängt - hierbei handelt es sich um den sog. Fangvorgang -, und ihn schließlich in der rechtsseitig dargestellten Position "Hubventil geschlossen" hält. Nachdem der Anker 4d sicher von der Spule 4a gefangen ist, wird in dieser im übrigen auf ein niedrigeres Haltestrom-Niveau umgeschaltet (vgl. I-t-Diagramm).

Der umgekehrte Übergang von "Hubventil geschlossen" zu "Hubventil offen" geschieht ausgehend von der in Figur 1 rechtsseitig dargestellten Position analog durch Ausschalten des Stromes I in der Schließer-Spule 4a und zeitversetztes Einschalten des Stromes für die Öffner-Spule 4b. Generell wird dabei für das Bestromen der Spulen 4a, 4b an diese eine ausreichende elektrische Spannung gelegt, während das Abschalten des elektrischen Stromes I durch eine Herabsetzung der elektrischen Spannung auf den Wert "Null" initiiert wird. Die notwendige elektrische Energie für den Betrieb jedes Aktors 4 wird dabei entweder dem Bordnetz des von der zugehörigen Brennkraftmaschine angetriebenen Fahrzeuges entnommen oder über eine separate, dem Ventiltrieb der Brennkraftmaschine angepaßte Energieversorgung bereitgestellt. Dabei wird die elektrische Spannung durch die Energieversorgung konstant gehalten, und der Spulenstrom I der den Brennkraftmaschinen-Hubventilen 1 zugeordneten Aktoren 4 durch ein Steuergerät derart gesteuert, daß sich die notwendigen Kräfte für das Öffnen, Schließen und Halten des bzw. der Hubventile 1 in der jeweils gewünschter Position ergeben.

Beim soeben erläuterten Stand der Technik wird der Spulenstrom I während des sogenannten Fangvorganges, in welchem eine der beiden Spulen 4a, 4b danach trachtet, den Anker 4d einzufangen, vom genannten Steuergerät bzw. von einer Steuereinheit durch Taktung auf einen Wert geregelt, der groß genug ist um den Anker 4d unter allen Bedingungen sicher einzufangen. Nun ist die Kraft der fangenden Elektromagnet-Spule 4a bzw. 4b auf den Anker 4d näherungsweise proportional zum Strom I und umgekehrt proportional zum Abstand zwischen Spule und Anker. Wird nun - wie im bekannten Stand der Technik - ein konstanter Strom I eingestellt, so steigt die auf den Anker 4d einwirkende Magnet-Kraft mit seiner Annäherung an die jeweilige ihn einfangende Spule 4a bzw. 4b umgekehrt proportional zum verbleibenden Spalt, wodurch die Ankerbeschleunigung und Ankergeschwindigkeit ansteigen. Hieraus resultiert eine hohe Auftreffgeschwindigkeit des Ankers 4d auf die jeweilige Elektromagent-Spule 4a bzw. 4b, was zum einen einen hohen Verschleiß im Aktor 4, zum anderen aber auch eine hohe Geräuschentwicklung zur Folge hat. Ein weiterer Nachteil sind die bei der kurz beschriebenen getakteten Stromregelung auftretenden Umschaltverluste der Transistoren, die eine erhöhte Leistungsaufnahme und Temperaturbelastung des verwendeten Steuergerätes sowie eine erhöhte elektromagnetische Abstrahlung in den Zuleitungen der Aktoren zur Folge haben.

Verbesserungen insbesondere im Hinblick auf die Geräuschentwicklung sowie den Aktorverschleiß bringt der aus der eingangs genannten DE 195 30 121 A1 bekannte Stand der Technik. Hierin ist ein Verfahren zur Reduzierung der Auftreffgeschwindigkeit eines Ankers an einem elektromagnetischen Aktor vorgeschlagen, wobei mit einer Annäherung des Ankers an die Polfläche der den Anker einfangenden Spule die an dieser anliegende Spannung auf einen vorgebbaren Maximalwert begrenzt (d.h. im wesentlichen reduziert) wird, so daß der durch die Spule fließende Strom während eines Teils der Zeit der Spannungsbegrenzung abfällt. Ferner ist noch angegeben, daß das Ausmaß der Spannungsbegrenzung bzw. Spannungsreduzierung in einem Kennfeld festgelegt sein kann. Die entsprechenden Werte und insbesondere auch der jeweilige Zeitpunkt, zu welchem diese Spannungsreduzierung einsetzen soll, können auf experimentellem Wege bestimmt werden.

Aus der DE 198 32 198 A1 ist ein Verfahren zur Reduzierung der Auftreffgeschwindigkeit eines Ankers eines elektromagnetischen Aktors beschrieben, bei dem in einer Bremsphase, welches sich an eine Fangphase anschließt, eine getaktete elektrische Spannung angelegt wird, wobei die jeweiligen Schalt-Zeitpunkte und das Spannungs-Taktverhältnis eines Reglers anhand einer die Anker-Sollbewegung beschreibenden Solltrajektorie bestimmt werden.

Die tatsächlichen Spannungsverläufe für die Verwirklichung dieser Verfahren werden in der Regel über sogenannte Reglerentwurfsverfahren ermittelt. Dabei handelt es sich um empirische oder numerische, also rechnerische Verfahren, die bei Stellung von bestimmten Randbedingungen einen Spannungsverlauf ermitteln, mit dem das gewünschte Ergebnis dargestellt werden kann.

Bei den bisherigen Verfahren wurde allerdings nicht berücksichtigt, dass es im Anker teilweise zu hohen Wirbelströmen kommt, welche Energieverluste und Ungenauigkeiten bei den einzelnen Ventilsteuerzeiten nach sich ziehen. Diese Nachteile hat man bisher damit zu lösen versucht, dass Wirbelströme durch die Verwendung eines geblechten Ankers oder eines Ankers mit niedriger elektrischer Leitfähigkeit möglichst vermieden werden. Dies führt jedoch in der Regel zu hohen Kosten.

Aufgabe der vorliegenden Erfindung ist es, ein Verfahren anzugeben, bei dem hohe Wirbelströme im Anker beim Betrieb eines eingangs beschriebenen elektromagnetischen Aktors möglichst vermieden werden können.

Diese Aufgabe wird durch die im Anspruch 1 genannten Merkmale gelöst.

Ein wesentlicher Gedanke der vorliegenden Erfindung ist die Berücksichtigung der im Anker auftretenden Wirbelströme bei der Erstellung des Spannungsverlaufs zur Regelung/Steuerung des elektromagnetischen Aktors. Dabei kann aus einer Menge von möglichen Spannungsverläufen, die jeweils einen Betrieb eines elektrischen Aktors in der erforderlichen Weise gestatten, ein Spannungsverlauf im Sinne einer Vermeidung von Wirbelströmen ausgewählt werden.

Zum Verständnis der Erfindung ist es hilfreich, ein Ersatzschaltbild für die Magnetflüsse zu entwerfen, welches die Magnetquellen sowie die Magnetwiderstände aufzeigt. In diesem Ersatzschaltbild stellt der im Anker auftretende Wirbelstrom eine Magnetflussquelle dar, die einen Magnetfluß erzeugt, der dem übrigen Magnetfluss entgegengerichtet ist. Durch entsprechende Berücksichtigung dieser Magnetflussquelle in einem mathematischen Modell, mit dem die Wirbelströme im Anker berechnet werden können, kann dann eine Spannungssteuerung gewählt werden, die zu einem minimalen Wirbelstrom führt.

Vorzugsweise wird ein mathematisches oder numerisches Modell zur Ermittlung des Spannungsverlaufs verwendet. Eine Möglichkeit zur Ermittlung des Spannungsverlaufs besteht in der Verwendung eines sog. Reglerentwurfsverfahrens mit variabler Struktur, wie sie allgemein bekannt sind.

Der Spannungsverlauf kann dann auf verschiedene Arten und Weisen, beispielsweise durch eine Pulsweitenmodulation, realisiert werden.

Die vorliegende Erfindung wird nachfolgend anhand eines Ausführungsbeispiels und mit Bezug auf die beiliegenden Zeichnungen näher erläutert. Die Zeichnungen zeigen in
- Fig. 1: eine schematische Darstellung eines elektromagnetischen Aktors mit zugeordnetem Hubventil in den beiden möglichen Endlagen des Hubventils, wobei zwischen den beiden gezeig- ten Zuständen der Verlauf des Ankerhubs z sowie der Verlauf des Stromflusses I in den beiden Elektromagnet-Spulen dargestellt ist,
- Fig. 2: ein Blockdiagramm, in der ein Regelungskonzept gemäß einer Ausführungsform der vorliegenden Erfindung dargestellt ist,
- Fig. 3a bis 3d: Diagramme, die einzelne Phasen einer Regelung während des Fangvorganges darstellen,
- Fig. 4: eine schematische Darstellung eines Aktorteils mit einem skizzierten Magnetfluß und
- Fig. 5: ein Ersatzschaltbild des in Figur 4 abgebildeten Magnetflusses.

Bezüglich der Beschreibung zu Figur 1 wird auf die einleitende Ausführung verwiesen.

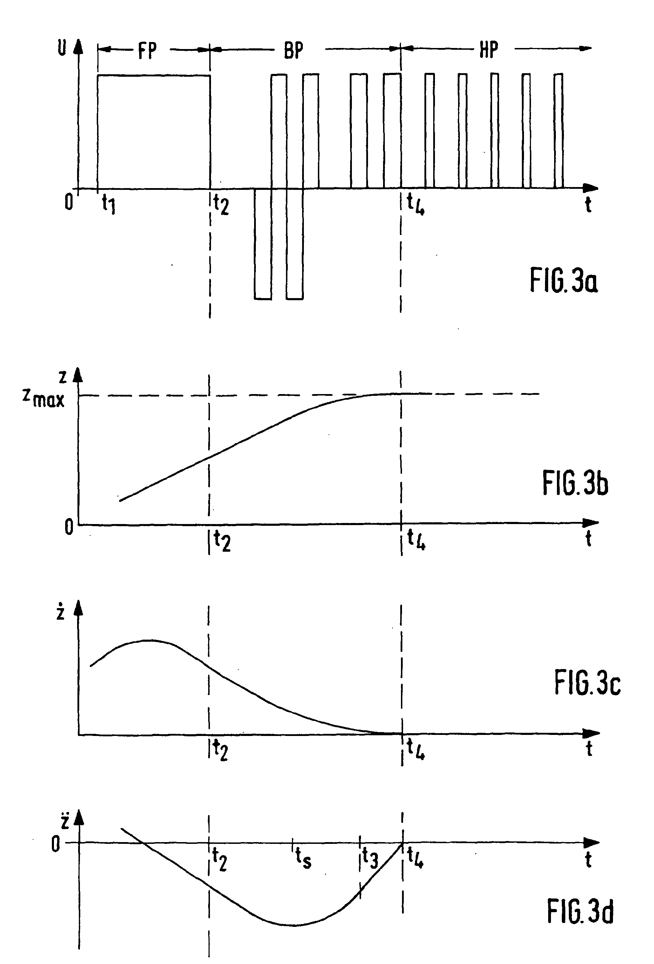

Eine Ausführungsform eines Regelungskonzeptes ist blockschaltbildartig in Figur 2 dargestellt. Ein Regler 10 führt eine Regelung anhand der Signale einer die Anker-Sollbewegung beschreibenden Solltrajektorie 20 durch, wobei Signale eines nebengeordneten Beobachters 11 verarbeitet werden. Die Ausgangsgröße des Regelungskonzeptes bzw. des Reglers 10 ist eine an der jeweils den Anker 4d (siehe Figur 1) einfangenden Spule 4a bzw. 4b angelegte oder anliegende elektrische Spannung U. Diese Spannung U hat beispielsweise einen betragsmäßig festgelegten Wert und wird vom Regler 10 zeitlich getaktet an die jeweilige Spule 4a bzw. 4b angelegt (Pulsweitenmodulation), wobei das Vorzeichen der elektrischen Spannung in geeigneter Weise bestimmt wird.

Die dem Hubverlauf des Hubventils 1 bzw. Ankers 4d entsprechende Position zwischen den Spulen 4a, 4b durch die Wegkoordinate z, welche auf geeignete Weise gemessen wird, ist eine Eingangsgröße des hier beschriebenen Regelungskonzeptes. Die Wegkoordinate z wird dabei vom Beobachter 11 weiter verarbeitet. Der Einfachheit halber wird im folgenden die Position des Ankers direkt mit "z" bezeichnet, ohne den erklärenden Begriff "Wegkoordinate" zu verwenden.

Aus der Wegkoordinate z ist durch einmalige bzw. zweimalige Ableitung über die Zeit die Bewegungsgeschwindigkeit *ż* des Ankers sowie die Anker-Beschleunigung *z̈* schätzbar bzw. ermittelbar. Der Wert z sowie die daraus abgeleiteten Größen *ż* , *z̈* werden dabei vom Beobachter 11 ermittelt und als sog. Schätzwert 21 dem Regler 10 mitgeteilt.

Eine weitere Eingangsgröße des hier beschriebenen Regelungskonzeptes, die vom Beobachter 11 bei der Ermittlung der Schätzwerte 21 verarbeitet wird, ist der in den jeweiligen Spulen 4a, 4b ermittelte Stromfluß I.I ist eine Folge der angelegten Spannung U.

Die in der Figurenfolge 3a bis 3d gezeigten Phasen stellen die Regelung während des Fangvorgangs durch eine der beiden Spulen 4a, 4b bei einem System nach Figur 1 dar.

Jeweils über der Zeit t ist dabei im oberen Diagramm (Figur 3a) die an die den Anker einfangende Elektromagnet-Spule angelegte elektrische Spannung U aufgetragen, während im zweiten Diagramm (Figur 3b) die zugehörige Wegkoordinate z des Ankers 4d dargestellt ist. In Figur 3a sind dabei die einzelnen Phasen, nämlich die Fangphase FP, die Bremsphase BP und die nach dem Auftreffen des Ankers auf der Spule folgende Haltephase HP gekennzeichnet.

Was nun den Start der Fangphase FP zum Zeitpunkt t₁ betrifft, zu welchem die den Anker einfangende Spule mit elektrischer Spannung U beaufschlagt wird, so kann dieser Einschaltzeitpunkt t₁ grundsätzlich innerhalb gewisser Grenzen frei gewählt werden; es muß hierbei lediglich sichergestellt sein, dass der Anker 4d überhaupt noch eingefangen werden kann. Die Ermittlung der Spannung U bzw. des Spannungsverlaufs wird später noch näher erläutert.

Wie in Figur 3a dargestellt, unterteilt der Regler 10 den gesamten Fangvorgang des Ankers 4d in zwei Phasen, nämlich eine Fangphase FP und eine sich daran anschließende Bremsphase BP.

Die letztgenannte Phase schließt sich nach dem Auftreffen des Ankers 4d auf der jeweiligen Spule 4a bzw. 4b als dritte Phase (Haltephase HP) an. In dieser Phase wird der Anker 4d sicher auf der jeweiligen Elektromagnet-Spule gehalten. Hierzu kann die Haltestromregelung umgeschalten werden, was wie dargestellt durch eine getaktete Beaufschlagung der jeweiligen Spule 4a, 4b mit der elektrischen Spannung U erfolgt.

Bei der Bremsphase BP wird in dieser zum Zeitpunkt t₂ zunächst die Spannungsversorgung der jeweiligen, den Anker 4d einfangende Spule 4a bzw. 4b unterbrochen, wodurch diese Bremsphase BP gestartet wird. Die jeweiligen Zeitpunkte für das Abschalten und Zuschalten der betragsmäßig konstanten oder betragsmäßig variablen Spannung U sowie das hierzu gehörige Vorzeichen wird dabei vom Regler 10 nach einem vorgegebenen und vorher festgelegten Spannungsverlauf bestimmt.

Die Funktion des Reglers 10 läßt sich dabei wie folgt beschreiben: Zur Erzielung einer reduzierten Auftreffgeschwindigkeit auf der jeweiligen Spule 4a bzw. 4b muß der Anker 4d bereits in seiner Flugphase, d.h. bei dem eigentlichen Auftreffen, geregelt abgebremst werden. Allerdings sollte diese Bremsphase BP die Öffnungs- und Schließzeit des vom Aktor 4 betätigten Brennkraftmaschinen-Hubventiles 1 nicht mehr als nötig verlängern.

Für den Entwurf eines diesen Anforderungen gerecht werdenden Reglers 10 sind zunächst geeignete Zustandsgrößen für die Ankerbewegung auszuwählen. Bevorzugt wird hierbei neben der Ankerposition z und der AnkerGeschwindigkeit *ż*, die sich grundsätzlich durch zeitliche Differenzierung der Ankerposition z ermitteln läßt, die Ankerbeschleunigung *z̈* als dritte Zustandsgröße gewählt, da sie als direkte Ableitung der Ankergeschwindigkeit i ebenfalls eine leicht interpretierbare Größe darstellt.

Neben diesen drei Größen nämlich der Ankerposition z, der AnkerGeschwindigkeit *ż* und der Ankerbeschleunigung *z̈* werden nachfolgend noch weitere Randbedingungen genannt.

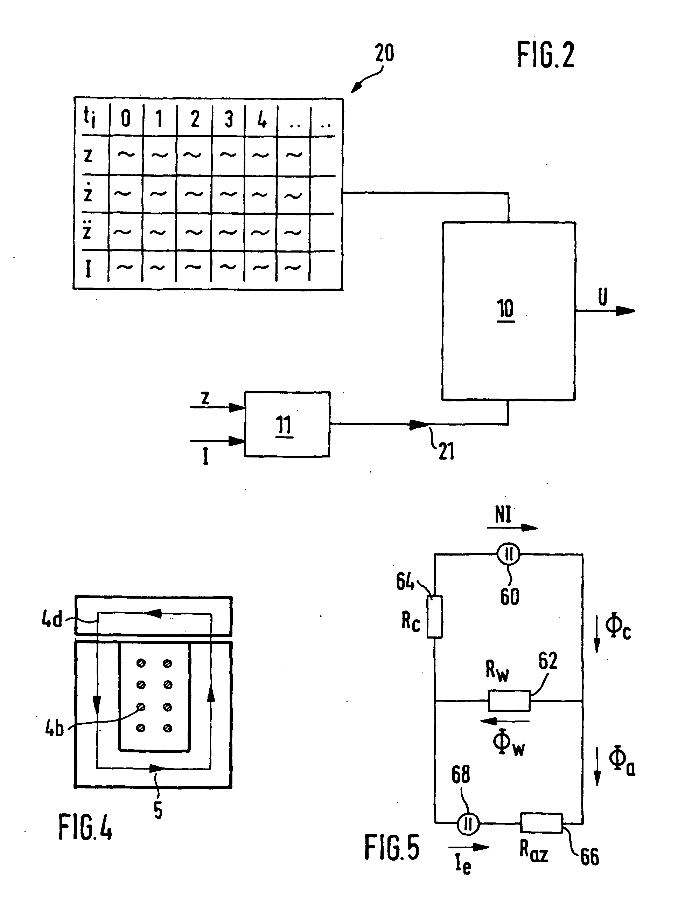

Wie in Figur 4 (welche einen Ausschnitt eines elektrischen Aktors gemäß Fig. 1 darstellt) gezeigt wird, findet ein durch die Bestromung der Spulen 4a bzw. 4b verursachter Magnetfluss statt. Dabei ergibt sich, wie aus dem Ersatzschaltbild gemäß Fig 5 klar wird, zum einen ein Magnetfluss Φ_{c} im Joch. Ferner findet im Anker 4d ein Magnetfluss Φₐ statt. Darüber hinaus existiert ein Streumagnetfluss Φ_{w} zwischen den beiden offenen Enden des Jochs 5, und zwar sowohl bei aufliegendem wie auch bei nicht aufliegendem Anker.

Die Bezugsziffer 60 in Fig. 5 bezeichnet die durch die Spulen 4a bzw. 4b erzeugte Magnetflussquelle, welche durch die Anzahl der Spulenwindungen N sowie durch den Spulenstrom I charakterisierbar ist. Der über die beiden offenen Enden des Jochs 5 stattfindende Streumagnetfluss Φ_{w} wird als magnetischer Widerstand R_{w} beschrieben. Der magnetische Widerstand R_{c} (Bezugsziffer 64) stellt den magnetischen Widerstand im Joch 5 dar. Der magnetische Widerstand R_{az} (Bezugsziffer 66) stellt den magnetischen Widerstand im Anker einerseits und in den Luftspalten zwischen Anker 4d und dem Joch 5 für den Fall dar, dass der Anker 4d nicht vollständig auf dem Joch 5 aufliegt.

Mit der Bezugsziffer 68 ist eine weitere Magnetflussquelle gekennzeichnet, die aus dem im Anker 4d induzierten Wirbelstrom Iₗ resultiert. Der im Anker 4d induzierte Wirbelstrom Iₗ kann mittels eines mathematischen Modells bestimmt werden. Während den verschiedenen Phasen (Fangphase, Bremsphase) kann nun der Regler 10 zur Ausführung seiner Funktion auf die oben beschriebene Solltrajektorie 20 zurückgreifen. Diese Solltrajektorie enthält in Abhängigkeit von der Zeit t neben den miteinander korrelierenden Werten für die Postition z, die Geschwindigkeit *ż* und die Beschleunigung *z̈* des Ankers 4d auch den Strom I, welcher für die im Anker 4d induzierte Spannung mit zu berücksichtigen ist.

Bei der Solltrajektorie 20 handelt es sich somit um nichts anderes, als um eine Wertetabelle von Soll-Werten, die in einen Speicher abgelegt sind.

Falls nun bei Betrieb des elektromagnetischen Aktors 4 die tatsächlichen IstWerte für die Position z, die Geschwindigkeit *ż* sowie die Beschleunigung *z̈* des Ankers 4d zu stark von den Soll-Werten abweichen, so korrigiert dies der Regler 10 durch geeignetes Zu- oder Abschalten der Spannung U. Die detaillierte Auslegung des Reglers 10 kann dabei durch verschiedene Verfahren der linearen und nicht linearen Regelungstheorie erfolgen und sollen hier nicht näher behandelt werden.

Was nun die Ermittlung dieser Wertetabelle bzw. Solltrajektorie 20 betrifft, so wird bei einer bevorzugten Ausführungsform vorgeschlagen, diese unter anderem aus der Randbedienung, dass die Beschleunigung *z̈* des Ankers 4d zum Zeitpunkt des Auftreffens auf der jeweiligen Elektromagnet-Spule 4a bzw. 4b den Wert 0 haben soll, zu berechnen. Ferner soll der Strom I in der Wertetabelle derart ausgelegt sein, dass der daraus resultierende Wirbelstrom im Anker 4d minimal gehalten werden kann. Bei Einhalten dieser Bedingungen kann der Anker 4d ruckfrei auf die Spule 4a bzw. 4b aufsetzen ohne dass es während der Fangphase zu übermäßigen Wirbelstromverlusten im Anker 4d kommt.

In den Figuren 3b, 3c und 3d ist dabei die Position z, die AnkerGeschwindigkeit *ż* sowie die Anker-Beschleunigung *z̈* jeweils über der Zeit und in der Endphase der Ankerbewegung, d.h. vor dem Auftreffen des Ankers 4d auf der in einfangende Spule 4a bzw. 4b, aufgetragen. Ab dem Zeitpunkt t₂ wird der eigentliche Regelvorgang gestartet und zwar bis zu dem Aufsetzzeitpunkt t₄, was die Bremsphase BP beendet.

Wie sich aus der bisherigen Beschreibung ergibt, benötigt der Regler 10 beim vorliegenden Verfahren für die Durchführung hier in der Funktion zumindest vier Zustandsgrößen und zwar bevorzugt die Anker-Position z, die Bewegungsgeschwindigkeit *ż* des Ankers 4d, sowie die Anker-Beschleunigung *z̈* und den Spulenstrom I. Es ist zweckmäßig sogenannte Beobachter 11 zur Ermittlung von Zustandsgrößen einzusetzen, wie dies im Zusammenhang mit Figur 2 bereits angesprochen wurde. In diesem Beobachter 11 ist dem Aktor 4 ein Aktormodell parallel geschaltet, das mit einer für den Aktor 4 wesentlichen Größe, nämlich mit der Größe des in der jeweiligen Spule 4a, 4b festgestellten Stromflusses I, gespeist wird. In diesen Beobachter 11 können die auf dieser Basis geschätzte Ankerposition mit der tatsächlich gemessen und dem Beobachter 11 zusätzlich als Eingangsgröße übermittelten Ankerposition z verglichen werden. Die Differenz hieraus kann dann über eine Korrekturfunktion auf die Größe bzw. sogenannte Zustandsgrößen des Aktormodells zurückgekoppelt werden. Bei einer fehlerhaften Schätzung der Anfangszustände gleicht der Beobachter 11 aufgrund der darin enthaltenen Korrekturfunktion die geschätzten Werte für die Anker-Position z, die Bewegungsgeschwindigkeit *ż* des Ankers 4d sowie die Anker-Beschleunigung *z̈* und dem Storm I den tatsächlichen Werten hierfür an. Die Auslegung der soeben genannten Korrekturfunktion kann dabei durch verschiedene Verfahren der linearen und nichtlinearen Regelungstheorie erfolgen. Bei der Berücksichtigung des im Anker induzierten Wirbelstroms können diese durch ein geeignetes Spannungsregelverfahren vermieden werden, so dass es zu keinen übermäßigen Energieverlusten kommt. Überdies läßt sich damit eine höhere Genauigkeit der Steuerzeiten erreichen. Auch sind keine konstruktiven Maßnahmen zur Vermeidung der Wirbelströme notwendig. Vielmehr werden die Wirbelströme durch geeignetes zu- und abschalten der Spulenspannung in dem erforderlichen und gewünschten Maße gedämpft.

## Patentansprüche

1. Verfahren zum Betrieb eines elektromagnetischen Aktuators mit einem Anker (4d), der oszillierend zwischen zwei Elektromagnet-Spulen (4a, 4b) jeweils gegen die Kraft zumindest einer Rückstellfeder (2a, 2b) durch alternierende Bestromung der Elektromagnet-Spulen (4a, 4b) bewegt wird und wobei mit einer Annäherung des Ankers (4d) an die zunächst bestromte Spule (4a, 4b) während des sogenannten Fangvorganges die an der den Anker einfangenden Spule (4a, 4b) anliegende Spannung reduziert wird,
**dadurch gekennzeichnet,**
**daß** eine Spannungssteuerung mit einem Spannungsverlauf gewählt wird, bei dem ein mit einem mathematischen Modell berechneter Wirbelstrom im Anker (4d) möglichst klein gehalten wird.

2. Verfahren nach Anspruch 1,
**dadurch gekennzeichnet,**
**daß** der Spannungsverlauf empirisch oder numerisch, insbesondere anhand einer Simulation, bestimmt wird.

3. Verfahren nach einem der vorhergehenden Ansprüche,
**dadurch gekennzeichnet,**
**daß** der Spannungsverlauf mittels eines Reglerentwurfsverfahren mit variabler Struktur bestimmt wird.

4. Verfahren nach einem der vorhergehenden Ansprüche,
**dadurch gekennzeichnet,**
**daß** der Spannungsverlauf durch Pulsweitenmodulations realisiert wird.

## Claims

1. A method for operating an electromagnetic actuator, comprising an armature (4d), which is moved in an oscillating manner between two electromagnetic coils (4a, 4b) in each case against the force of at least one return spring (2a, 2b) by means of an alternating supply of current to the electromagnetic coils (4a, 4b), and wherein, as the armature (4d) approaches the coil (4a, 4b) supplied first with current, during the so-called catch process, the voltage applied to the coil (4a, 4b) catching the armature, is reduced, **characterised in that** a voltage control method with a voltage curve is selected, with which an eddy current in the armature (4d), calculated with a mathematical model, is minimised.

2. A method according to claim 1, **characterised in that** the voltage curve is determined empirically or numerically, more especially with the aid of a simulation.

3. A method according to any one of the preceding claims, **characterised in that** the voltage curve is determined by means of a controller design method with a variable structure.

4. A method according to any one of the preceding claims, **characterised in that** the voltage curve is implemented by pulse width modulation.

## Revendications

1. Procédé pour le fonctionnement d'un actionneur électromagnétique avec un induit (4d) déplacé de manière oscillante entre deux bobines électromagnétiques (4a, 4b) contre la force d'au moins un ressort de rappel (2a, 2b) par alimentation alternante en courant des bobines électromagnétiques (4a, 4b), et selon lequel la tension appliquée sur la bobine (4a, 4b) absorbant l'induit est réduite en rapprochant l'induit (4d) de la bobine (4a, 4b) d'abord alimentée en courant pendant l'opération d'absorption,
**caractérisé en ce qu'**
une commande de tension est sélectionnée avec une courbe de tension pour laquelle un courant de Foucault dans l'induit (4d), calculé selon un modèle mathématique, est maintenu le plus petit possible.

2. Procédé selon la revendication 1,
**caractérisé en ce que**
la courbe de tension est déterminée de manière empirique ou numérique, notamment à l'aide d'une simulation.

3. Procédé selon l'une quelconque des revendications précédentes,
**caractérisé en ce que**
la courbe de tension est déterminée au moyen d'un procédé de conception de régulateur à structure variable.

4. Procédé selon l'une quelconque des revendications précédentes,
**caractérisé en ce que**
la courbe de tension est réalisée par modulations d'impulsions en largeur.
